# FASCICULE DE BREVET EUROPEEN

(11) **EP 2 554 478 B1**
(45) Date de publication et mention de la délivrance du brevet: **09.10.2013**
(21) Numéro de dépôt: 12178702.2
(22) Date de dépôt: 31.07.2012
(51) Int. Cl.: B64D 27/26, B64D 29/06

(54) **Berceau d'articulation de capots de soufflante supportes par ces capots en position fermée**
Schwenkbare Verkleidung für Triebwerksvekleidungen getragen von diesen Triebwerksvekleidungen im geschlossenen Zustand
Articulated fairing for nacelle members supported by these nacelle members in a closed position

(30) Priorité: 03.08.2011 FR 1157129
(43) Date de publication de la demande: 06.02.2013
(73) Titulaire: Airbus Operations (Société par actions simplifiée), 31060 Toulouse (FR)
(72) Inventeur: Letay, Benoît, 31620 BOULOC (FR); Toro, Andrès, 31490 LEGUEVIN (FR); Venet, Adrien, 32600 Aurade (FR)
(74) Mandataire: Ilgart, Jean-Christophe

(56) Documents cités:
- WO-A1-2008/006826
- FR-A1- 2 920 409

## Description

### DOMAINE TECHNIQUE

La présente invention se rapporte à un ensemble moteur pour aéronef comprenant un moteur, un dispositif d'accrochage du moteur ainsi qu'une nacelle entourant le moteur et pourvue de capots de soufflante ainsi que d'une entrée d'air, le dispositif d'accrochage précité comportant une structure rigide ainsi qu'une structure aérodynamique avant sur laquelle les capots de soufflante sont montés mobiles, de préférence de façon articulée.

Ce type de dispositif d'accrochage, également appelé mât d'accrochage ou « EMS » (de l'anglais « Engine Mounting Structure »), permet globalement de suspendre un moteur tel qu'un turboréacteur au-dessous de la voilure de l'aéronef, ou bien de monter ce moteur au-dessus de cette même voilure, voire encore d'assembler ce moteur sur une partie arrière de fuselage de l'aéronef.

### ETAT DE LA TECHNIQUE ANTERIEURE

Un tel dispositif d'accrochage est en effet prévu pour constituer l'interface de liaison entre un moteur et une voilure de l'aéronef. Il permet de transmettre à la structure de cet aéronef les efforts générés par son moteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide également dénommée structure primaire, souvent du type « caisson », c'est-à-dire formée par l'assemblage de longerons supérieurs et inférieurs et de panneaux latéraux raccordés entre eux par l'intermédiaire de nervures transversales.

D'autre part, le dispositif d'accrochage est muni de moyens d'accrochage interposés entre le moteur et la structure rigide, ces moyens comportant globalement deux attaches moteur, ainsi qu'un dispositif de reprise des efforts de poussée générés par le moteur. Dans l'art antérieur, ce dispositif de reprise comprend habituellement deux bielles latérales raccordées d'une part à un carter du moteur tel que le carter de soufflante ou le carter intermédiaire, et d'autre part à une attache moteur arrière ou avant fixée sur le carter central ou sur le carter d'éjection de ce dernier.

De la même façon, le dispositif d'accrochage comporte également une autre série d'attaches constituant un système de montage interposé entre la structure rigide et la voilure de l'aéronef, ce système étant habituellement composé de deux ou trois attaches.

Par ailleurs, le mât est pourvu d'une pluralité de structures secondaires assurant notamment la ségrégation et le maintien des systèmes tout en supportant des éléments de carénage aérodynamique, ces derniers prenant généralement la forme de panneaux ou capotages intégrés à ces mêmes structures. De façon connue de l'homme du métier, les structures secondaires se différencient de la structure rigide, également dénommée structure primaire, par le fait qu'elles ne sont pas destinées à assurer le transfert des efforts provenant du moteur et devant être transmis vers la voilure de l'aéronef.

Parmi les structures secondaires, on compte une structure aérodynamique avant située à l'avant de la structure rigide du mât d'accrochage, cette structure aérodynamique avant disposant non seulement d'une fonction de carénage aérodynamique, mais permettant également la mise en place, la ségrégation et le cheminement de différents systèmes (air, électrique, hydraulique, carburant). De plus, cette structure aérodynamique avant porte les capots de soufflante de la nacelle, tandis que les capots d'inverseur de poussée sont quant à eux généralement portés par la structure rigide du mât d'accrochage.

Dans les solutions de l'art antérieur, notamment celle connue du document FR 2 920 409, la structure aérodynamique avant comporte généralement un berceau revêtu d'un capotage aérodynamique, monté fixement sur ce dernier ou réalisé d'une seule pièce avec celui-ci. Le capotage aérodynamique, également dit panneau ou élément de carénage aérodynamique, recouvre donc le berceau remplissant quant à lui un rôle structurel de support des capots de soufflante.

Le berceau précité est alors monté sur la structure rigide à l'aide de moyens d'accrochage appropriés. D'autre moyens d'accrochage assurent le montage de son extrémité avant sur l'entrée d'air ou sur le carter de soufflante du moteur.

D'autre part, lorsque les capots de soufflante sont en position fermée, ils sont supportés à leur extrémité avant par l'entrée d'air ou le carter de soufflante, et supportés à leur extrémité arrière par le système d'inverseur de poussée équipant le moteur. De plus, ils sont habituellement verrouillés l'un à l'autre, ce qui les place dans une configuration à degré élevé d'hyperstaticité.

Par conséquent, lorsque l'ensemble moteur est soumis à d'importantes contraintes tel que cela est rencontré durant les phases de décollage et d'atterrissage, ou encore en vol lors de fortes turbulences, les déplacements relatifs entre le moteur et le mât d'accrochage auxquels est rattaché le berceau conduit à une modification substantielle de la géométrie globale de l'ensemble, et plus spécifiquement de celle des capots de soufflante de la nacelle.

La déformation des capots de soufflante et des écopes d'air engendre des désalignements qui dégradent bien évidemment les performances aérodynamiques globales de l'aéronef.

### EXPOSÉ DE L'INVENTION

L'invention a donc pour but de proposer un ensemble moteur pour aéronef remédiant aux inconvénients mentionnés ci-dessus, relatifs aux réalisations de l'art antérieur.

Pour ce faire, l'invention a pour objet un ensemble moteur pour aéronef comprenant un moteur, un dispositif d'accrochage du moteur ainsi qu'une nacelle entourant le moteur et pourvue de capots de soufflante ainsi que d'une entrée d'air, ledit dispositif d'accrochage comportant une structure rigide ainsi qu'une structure aérodynamique avant, cette dernière présentant un berceau équipé d'un capotage aérodynamique, ledit berceau étant monté articulé à son extrémité avant sur une entité comportant un carter de soufflante dudit moteur ainsi que l'entrée d'air, et lesdits capots de soufflante étant montés mobiles sur ledit berceau de manière à pouvoir occuper une position ouverte ainsi qu'une position fermée dans laquelle ils sont supportés à l'avant par ladite entité et à l'arrière par un système d'inverseur de poussée.

Selon l'invention, l'ensemble est conçu de sorte que lorsque les capots de soufflante sont en position ouverte, ledit berceau adopte une première configuration dans laquelle son extrémité arrière est retenue par une portée du mât d'accrochage, et de sorte que lorsque les capots de soufflante sont en position fermée, ledit berceau, porté par les capots de soufflante, adopte une seconde configuration dans laquelle il est dépourvu de liaison mécanique directe avec les autres éléments du mât.

Par conséquent, l'invention prévoit astucieusement, lorsque les capots sont en position fermée, de découpler mécaniquement le berceau du reste du mât. Cela réduit le degré d'hyperstaticité des capots de soufflante, dont les déformations subsistantes, notamment dues aux pressions aérodynamiques, peuvent être accompagnées par la structure aérodynamique avant, et en particulier par son berceau. Dans cet état, chaque capot se trouve donc supporté à l'avant par l'entité et à l'arrière par le système d'inverseur de poussée, et porte le berceau qui est par ailleurs maintenu par l'articulation le reliant à l'entité. En revanche, comme mentionné ci-dessus, il n'y a plus de liaison mécanique directe entre ce berceau et le reste du mât situé à l'arrière de celui-ci, ce qui permet à ce berceau de facilement accompagner la déformation des capots de soufflante, sans contraindre davantage ces derniers.

Ainsi, en vol, la géométrie nominale de la nacelle est mieux respectée, en particulier celle de ses capots de soufflante, et les performances aérodynamiques de l'ensemble moteur sont par conséquent accrues.

Ensuite, lorsque les capots de soufflante sont en position ouverte, tel que cela est le cas par exemple durant les opérations de maintenance au sol, le berceau adopte une configuration dans laquelle son extrémité arrière est retenue par une portée spécifique du mât, par exemple en reposant simplement sur celle-ci, par gravité. Cette portée spécifique du mât est par exemple constituée par une extension avant de sa structure secondaire. Les capots sont alors à leur tour supportés par le berceau, et non l'inverse comme cela est le cas dans la seconde configuration du berceau, adoptée lorsque les capots sont en position fermée.

Le déplacement de la seconde configuration à la première configuration s'effectue de préférence par gravité, lors de l'ouverture des capots de soufflante. Ainsi, il est préférable que le berceau soit monté articulé à son extrémité avant sur l'entité, selon un axe d'articulation parallèle à une direction transversale de l'ensemble. D'ailleurs, durant ce déplacement, il est prévu que ledit berceau soit pivoté d'un angle compris entre 0,5 et 5° entre sa première et sa seconde configuration, autour de son articulation avec ladite entité.

De préférence, ladite portée du mât d'accrochage est solidaire d'une structure secondaire de ce mât, mais pourrait être tout autre élément du mât capable se supporter les efforts rencontrés lorsque le berceau adopte sa première configuration d'appui.

De préférence, ledit berceau est monté articulé à son extrémité avant sur l'entrée d'air de ladite entité, mais pourrait alternativement être monté articulé sur le carter de soufflante, sans sortir du cadre de l'invention.

De préférence, ledit berceau et le capotage aérodynamique sont réalisé d'une seule pièce, mais pourrait alternativement être fixés l'un à l'autre.

De préférence, dans ladite seconde configuration, ledit capotage aérodynamique de la structure avant se situe dans le prolongement aérodynamique d'un autre capotage aérodynamique du mât d'accrochage, cet autre capotage aérodynamique du mât étant préférentiellement celui à partir duquel s'étend ladite portée de retenue du berceau.

Enfin, chaque capot de soufflante est monté articulé sur ledit berceau, à l'aide préférentiellement d'au moins deux articulations.

L'invention a également pour objet un aéronef comprenant au moins un ensemble moteur tel que celui décrit ci-dessus, assemblé sur une aile ou sur une partie arrière de fuselage de cet aéronef.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle en perspective d'un ensemble moteur pour aéronef, selon un mode de réalisation préféré de la présente invention ;
- la figure 2 représente une vue partielle schématique de côté de l'ensemble moteur montré sur la figure 1 ;
- la figure 3 représente une vue partielle en perspective de la structure aérodynamique avant de l'ensemble moteur montré sur les figures précédentes ;
- la figure 4a représente une vue partielle de côté de l'ensemble moteur montré sur les figures précédentes, avec les capots de soufflante en position ouverte ;
- la figure 4b représente une vue de côté agrandie du berceau, dans sa première configuration adoptée lorsque les capots de soufflante sont en position ouverte ;
- la figure 5a représente une vue partielle de côté de l'ensemble moteur montré sur les figures précédentes, avec les capots de soufflante en position fermée ;
- la figure 5b représente une vue de côté agrandie du berceau, dans sa seconde configuration adoptée lorsque les capots de soufflante sont en position fermée ; et
- la figure 6 représente une vue schématique en coupe montrant l'un des capots de soufflante en position fermée, supporté par l'entrée d'air et le système d'inverseur de poussée.

### EXPOSÉ DÉTAILLÉ DE MODES DE RÉALISATION PRÉFÉRÉS

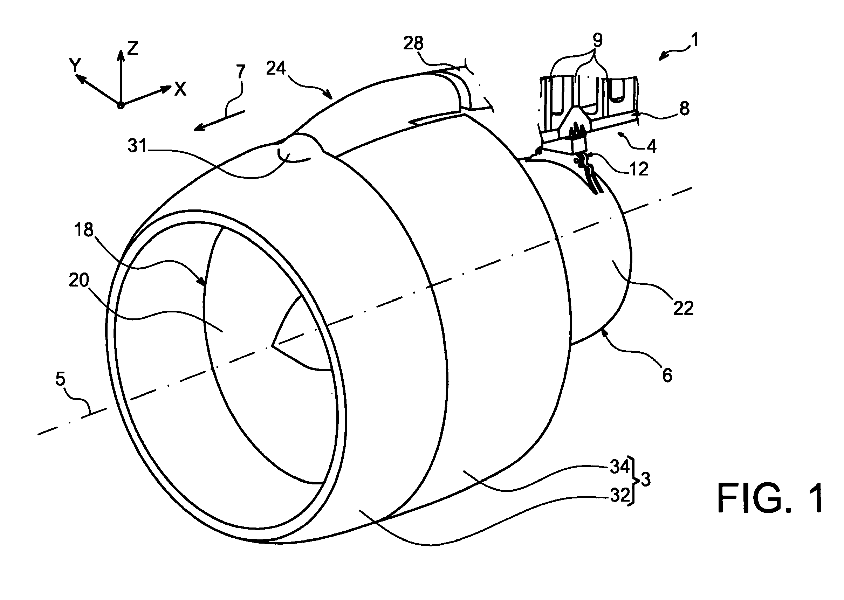

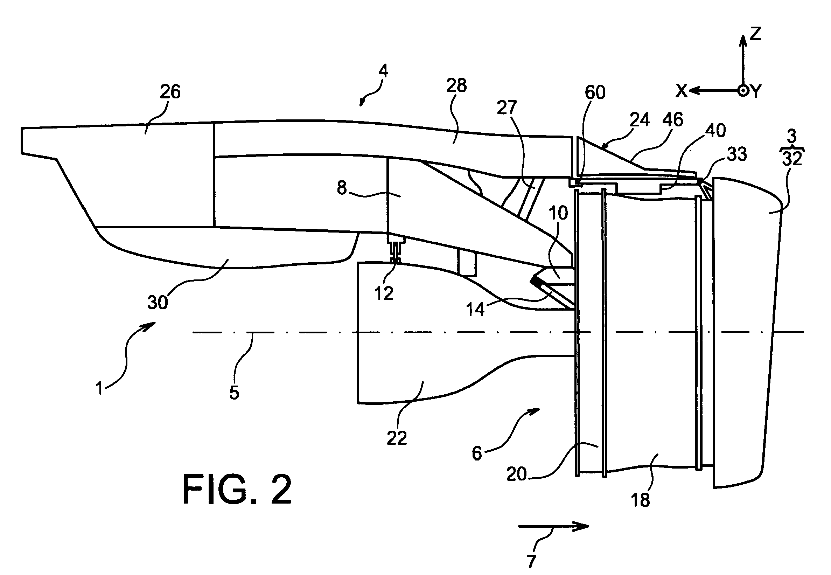

En référence tout d'abord aux figures 1 et 2, on voit un ensemble moteur 1 pour aéronef destiné à être fixé sous une aile de cet aéronef (non représentée), cet ensemble 1 comportant un dispositif d'accrochage 4, un moteur 6 tel qu'un turboréacteur accroché sous ce dispositif 4, et une nacelle 3 dont seule la partie avant a été représentée sur la figure 1.

Dans toute la description qui va suivre, par convention, on appelle X la direction longitudinale du dispositif 4 qui est également assimilable à la direction longitudinale du turboréacteur 6, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Globalement, le dispositif d'accrochage 4 comporte une structure rigide 8, également appelée structure primaire, portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est noté que le dispositif d'accrochage 4 comporte une autre série d'attaches (non représentées) rapportées sur la structure rigide 8 et permettant d'assurer la suspension de cet ensemble 1 sous la voilure de l'aéronef.

De plus, le dispositif d'accrochage 4 comprend une pluralité de structures secondaires rapportées sur la structure rigide 8. Ces structures secondaires assurant la ségrégation et le maintien des systèmes tout en supportant des éléments de carénage aérodynamique seront décrits ci-après.

Il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 22 sont bien entendu solidaires l'un de l'autre, et présentent une jonction habituellement dénommée carter intermédiaire. Enfin, il est précisé que le carter central 22 se prolonge vers l'arrière par un carter dit d'éjection (non référencé).

Les attaches moteur 10, 12 du dispositif 4 sont prévues au nombre de deux, et respectivement dénommées attache moteur avant et attache moteur arrière. L'attache moteur avant 10 est préférentiellement interposée entre une partie avant de la structure rigide 8, et le carter intermédiaire reliant radialement les carters 18 et 22. Cette attache moteur avant 10 est conçue de manière classique et connue de l'homme du métier, par exemple prévue pour reprendre les efforts s'exerçant dans les trois directions X, Y et Z.

D'autre part, l'attache moteur arrière 12, également réalisée de façon classique et connue de l'homme du métier et pouvant être conçue pour reprendre les efforts s'exerçant dans les directions Y et Z, est quant à elle interposée entre une partie plus arrière de la structure rigide 8, et le carter central 22 ou le carter d'éjection.

Le dispositif 14 de reprise des efforts de poussée générés par le moteur peut quant à lui présenter une forme classique de double bielle chacune disposée d'un côté du moteur 6, l'extrémité avant de chaque bielle étant montée sur une partie arrière du carter de soufflante ou du carter intermédiaire, et l'extrémité arrière étant rapportée sur l'attache moteur avant 10 ou sur la structure rigide 8 à proximité de cette dernière. Cette solution est dite à « bielles courtes ». Néanmoins, une solution dite à « bielles longues » est également envisageable, dans laquelle l'extrémité arrière de ces bielles est rapportée sur l'attache moteur arrière 12 ou sur la structure rigide 8 à proximité de cette dernière.

Dans ce mode de réalisation préféré de la présente invention, la structure rigide 8 prend la forme d'un caisson s'étendant de l'avant vers l'arrière, sensiblement selon la direction X.

Le caisson 8 le mieux représenté sur la figure 1 prend alors la forme d'un mât de conception similaire à celle habituellement observée pour les mâts d'accrochage de turboréacteurs, notamment en ce sens qu'il est pourvu de nervures transversales 9 prenant chacune la forme d'un rectangle orienté dans un plan YZ.

En référence plus spécifiquement à la figure 2, on compte parmi les structures secondaires du mât 4 une structure aérodynamique avant 24, une structure aérodynamique arrière 26, un carénage de raccordement 28 des structures aérodynamiques avant et arrière, et un carénage aérodynamique arrière inférieur 30.

Globalement, ces structures secondaires sont des éléments classiques identiques ou similaires à ceux rencontrés dans l'art antérieur, et connus de l'homme du métier, à l'exception de la structure aérodynamique avant 24 qui sera décrite en détails ci-après.

Plus précisément, la structure aérodynamique avant 24, qui est la seule à avoir été représentée sur la figure 1 pour des raisons de clarté, est habituellement placée à l'avant de la voilure, dans une position largement surélevée par rapport à la structure primaire 8 à laquelle elle n'est pas fixée directement. Elle présente une fonction de profil aérodynamique entre une partie supérieure des capots de soufflante articulés sur celle-ci, et le bord d'attaque de la voilure. Cette structure aérodynamique avant 24 dispose alors non seulement d'une fonction de support des capots de soufflante et de carénage aérodynamique, mais permet également la mise en place, la ségrégation et le cheminement de différents systèmes (air, électrique, hydraulique, carburant).

Directement dans le prolongement aérodynamique arrière de cette structure 24, monté au-dessus de la structure rigide 8, se trouve le carénage de raccordement 28, également appelé « karman ». La partie avant du karman est surélevée par rapport à la structure rigide 8 à laquelle elle est fixée par un système de bielles 27, tandis que la partie arrière du karman épouse le longeron supérieur de la structure rigide 8, en étant fixée à ce longeron.

Ensuite, toujours vers l'arrière, le carénage de raccordement 28 est prolongé par la structure aérodynamique arrière 26, qui contient la majeure partie des équipements hydrauliques. Cette structure 26 est de préférence située entièrement en arrière par rapport à la structure rigide 8, et est donc attachée sous la voilure de l'aéronef.

Enfin, sous la structure rigide 8 et la structure aérodynamique arrière 26, se trouve le carénage aérodynamique arrière inférieur 30, également appelé « bouclier » ou « Aft Pylon Fairing ». Ses fonctions essentielles sont la formation d'une barrière anti-feu, et la formation d'une continuité aérodynamique entre la sortie du moteur et le mât d'accrochage.

En référence à présent plus spécifiquement à la figure 1, on peut voir une partie de la nacelle 3 comportant au niveau de son extrémité avant une entrée d'air 32 fixée à l'avant du carter de soufflante 18, cette entrée d'air 32 étant directement suivie vers l'arrière par deux capots de soufflante 34 (un seul visible en raison de la vue en perspective) chacun monté de façon articulée sur la structure aérodynamique secondaire 24 discutée ci-dessus. Bien que cela n'ait pas été représenté, il doit être compris que la nacelle 3 de conception classique comporte vers l'arrière d'autres éléments connus de l'homme du métier, tels que des capots d'inverseurs de poussée montés sur la structure rigide 8.

De plus, l'entrée d'air 32 présente éventuellement, au niveau de sa partie arrière supérieure, une excroissance aérodynamique 31 se situant dans le prolongement avant de la structure aérodynamique avant 24 du mât. Il est à cet égard noté qu'une solution sans excroissance 31 pourrait être adoptée, sans sortir du cadre de l'invention, comme a d'ailleurs été représenté sur la figure 2.

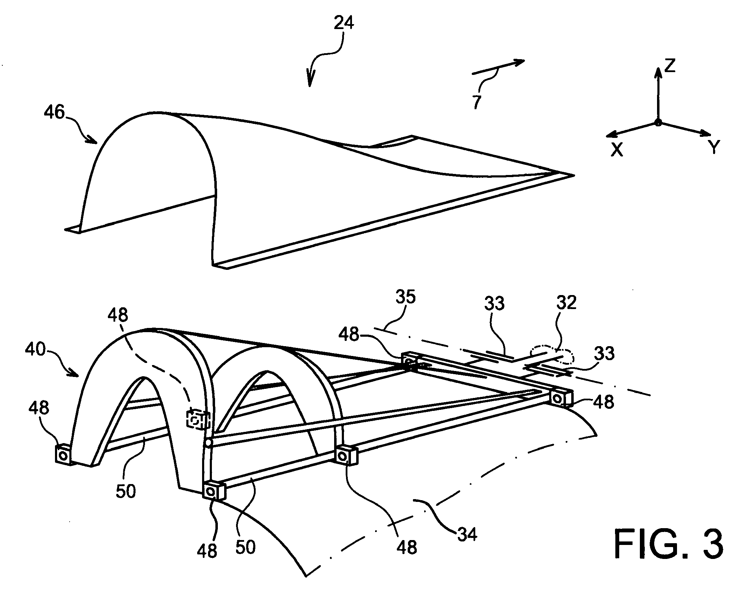

Il va à présent être fait référence à la figure 3, détaillant la structure aérodynamique avant 24.

Cette structure 24 présente un berceau 40 constituant la portion structurale de cet élément, cet élément étant également connu sous l'appellation anglaise « cradle ». Il s'étend globalement au-dessus du carter de soufflante 18 (non représenté), et est constitué d'une façon classique connue de l'homme du métier, à savoir par l'assemblage de longerons s'étendant sensiblement selon la direction X et d'éléments structurels transversaux, du type arceaux s'ouvrant vers le bas, par exemple de forme sensiblement semi-cylindrique.

Pour assurer le montage du berceau 40 sur l'entrée d'air, son extrémité avant est équipée d'une ou plusieurs articulations 33 la reliant à cette entrée d'air, ou, en alternative, à une extrémité avant du carter de soufflante. Dans le mode de réalisation représenté, il est prévu deux articulations 33 de même axe 35, parallèle à la direction Y. L'une des deux articulations 33 forme une liaison pivot, l'autre une liaison pivot glissant. Le berceau est donc capable de pivoter au niveau de son extrémité avant, autour de l'axe d'articulation transversal 35.

Le berceau 40 est revêtu de façon classique d'un capotage aérodynamique 46, réalisé d'une seule pièce avec le berceau ou fixé sur celui-ci. Le berceau est en outre pourvu d'une pluralité d'articulations de capots de soufflante 34, ces articulations étant de préférence agencées au niveau de chacun des deux longerons latéraux du berceau, disposés de part et d'autre du plan médian vertical et longitudinal. Chacun de ces deux longerons 50 porte donc une pluralité d'articulations 48 raccordées à l'un des capots de soufflante 34 de la nacelle. Dans l'exemple montré sur la figure 3, les articulations 48 prévues sur chaque longeron 50 sont par exemple au nombre de trois, orientées selon un même axe d'articulation de capot.

De plus, la figure 3 montre que la structure aérodynamique avant 24 s'étend de préférence selon la direction X sur une longueur identique ou similaire à celle des capots de soufflante 34 (un seul des deux capots étant représenté sur cette figure).

De retour à la figure 2, on peut s'apercevoir que la structure aérodynamique avant 24, dont le berceau 40 et la carénage 46 ont été représentés de manière schématique, est dépourvue de liaison mécanique directe avec la structure rigide 8 située à distance vers l'arrière et vers le bas par rapport à cette structure 24. En revanche, le carénage de raccordement 28 intègre à son extrémité avant une portée 60 sur laquelle l'extrémité arrière du berceau 40 est en mesure de reposer, dans certaines conditions qui vont à présent être détaillées. A cet égard, il est indiqué que la portée 60 est bien solidaire du carénage 28, mais pourrait aussi être une extension de la structure primaire 8. Selon encore autre alternative, la portée 60 pourrait être solidaire du carter de soufflante 18.

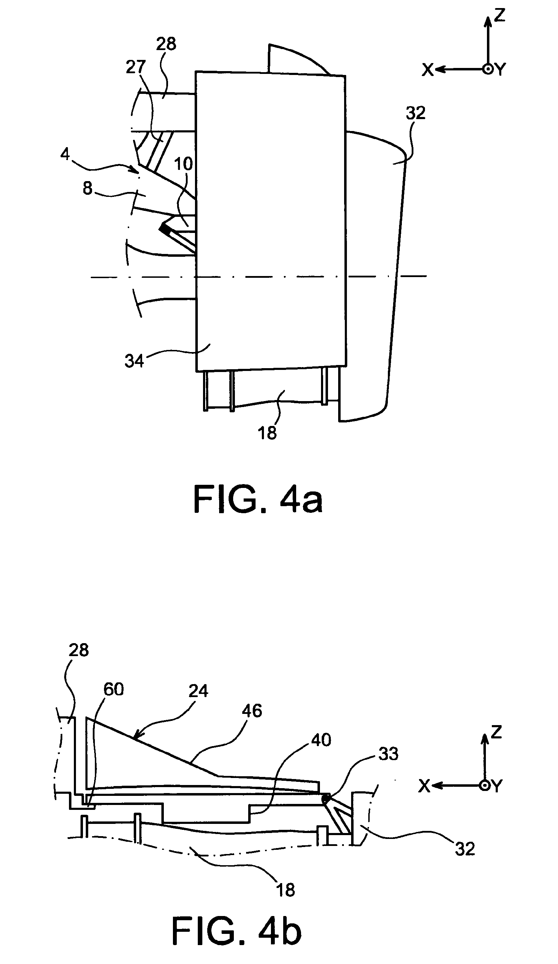

La figure 4b montre le berceau 40 dans une première configuration, adoptée lorsque les capots de soufflante 34 sont en position ouverte, tel que cela a été représenté sur la figure 4a. Dans cette première configuration, le berceau 40, monté pivotant à son extrémité avant par le biais des articulations 33, est retenu à son extrémité arrière par la portée 60 surélevée par rapport au carter de soufflante 18. Il s'agit de préférence d'un simple appui par gravité de l'extrémité arrière du capot sur la portée 60, de largeur transversale par exemple identique ou similaire à celle du berceau. D'autres moyens pourraient être utilisés pour assurer la retenue de l'extrémité arrière du berceau, comme un système de ressort ou similaire permettant la suspension de l'extrémité arrière depuis la portée 60.

Cette première configuration est adoptée au sol, en particulier durant les opérations de maintenance nécessitant l'ouverture des capots de soufflante 34.

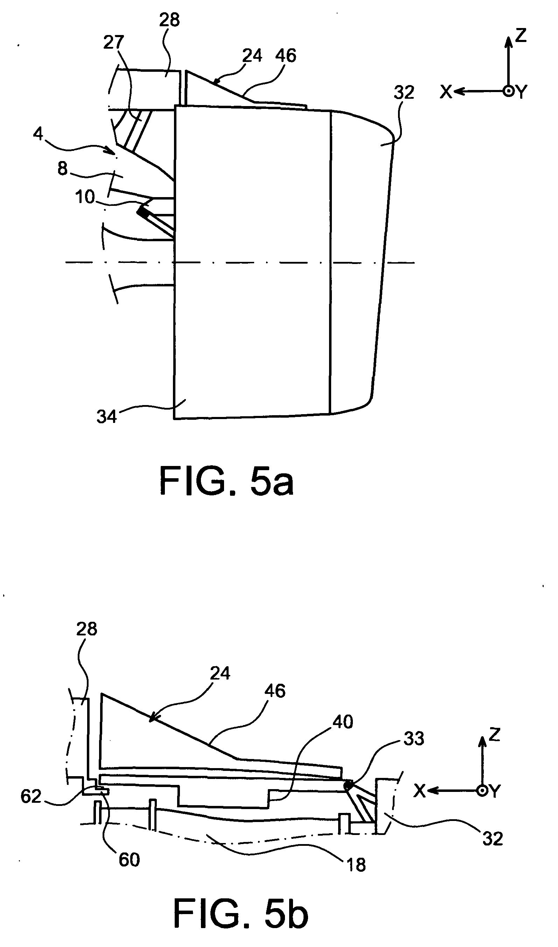

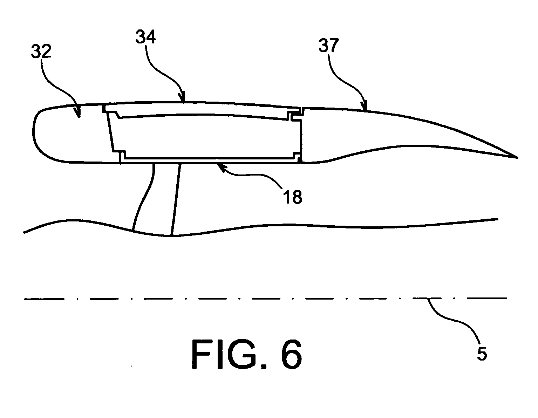

Lorsque ces capots 34 sont en position fermée représentée sur la figure 5a, verrouillés l'un à l'autre en partie basse, ils sont alors supportés à leur extrémité avant par l'entrée d'air 32, et supportés à leur extrémité arrière par le système d'inverseur de poussée 35 équipant le moteur, comme cela est visible schématiquement sur la figure 6. Afin de limiter le degré d'hyperstaticité dans lequel se trouve chacun des deux capots de soufflante, il est prévu que le berceau 40 adopte ici une seconde configuration montrée sur la figure 5b, dans laquelle son extrémité arrière n'est plus au contact de la portée 60. De manière plus générale, afin de limiter les contraintes sur les éléments de nacelle, en particulier sur ses capots 34, le berceau est alors dépourvu de toute liaison mécanique directe avec le reste du mât, que ce soit avec sa structure primaire ou avec sa structure secondaire.

Par rapport à la première configuration, le berceau 40 a quitté son appui sur la portée 60, par pivotement autour des articulations 33. Un jeu vertical 62 est alors observé entre les deux éléments 40 et 60. Néanmoins, cette perte d'appui est compensée par les capots 34 eux-mêmes, qui, en étant supportés par l'entrée d'air et le système d'inverseur de poussée, permettent de maintenir en place le berceau 40 auquel ils sont reliés mécaniquement par les articulations de capot 48. Naturellement, le support du berceau 40 est également conféré par les articulations 33 sur l'entrée d'air, ces articulations restant effectivement actives dans les deux configurations du berceau.

La seconde configuration qui vient d'être décrite permet de découpler mécaniquement le berceau du reste du mât. Cela réduit donc le degré d'hyperstaticité associé aux capots de soufflante, dont les déformations subsistantes rencontrées en vol peuvent être accompagnées par la structure aérodynamique avant 24, et en particulier par son berceau 40, sans que celui-ci ne soit contraint au niveau de son extrémité arrière.

Le passage de la première à la seconde configuration s'effectue automatiquement pendant la fermeture des capots de soufflante, qui voit ces derniers augmenter progressivement leur appui sur l'entrée d'air et l'inverseur de poussée. De même, le passage de la seconde à la première configuration s'effectue automatiquement par gravité pendant l'ouverture de ces capots, qui voit ces derniers diminuer progressivement leur appui sur l'entrée d'air et l'inverseur de poussée. D'ailleurs, il est prévu que le berceau 40 soit pivoté d'un angle faible entre sa première et sa seconde configuration, cet angle étant par exemple compris entre 0,5 et 5°. Cela se traduit par une faible amplitude de débattement, qui permet notamment de maintenir une continuité aérodynamique satisfaisante entre la structure avant 24 et le karman 28, lorsque le berceau adopte sa seconde configuration.

Bien entendu, diverses modifications peuvent être apportées par l'homme du métier à l'invention qui vient d'être décrite, uniquement à titre d'exemple non limitatif. A cet égard, on peut notamment indiquer que si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure, voire sur une partie arrière du fuselage de cet aéronef.

## Revendications

1. Ensemble moteur (1) pour aéronef comprenant un moteur (6), un dispositif d'accrochage du moteur (4) ainsi qu'une nacelle (3) entourant le moteur (6) et pourvue de capots de soufflante (34) ainsi que d'une entrée d'air (32), ledit dispositif d'accrochage (4) comportant une structure rigide (8) ainsi qu'une structure aérodynamique avant (24), cette dernière présentant un berceau (40) équipé d'un capotage aérodynamique (46), ledit berceau (40) étant monté articulé à son extrémité avant sur une entité comportant un carter de soufflante (18) dudit moteur (6) ainsi que l'entrée d'air (32), et lesdits capots de soufflante (34) étant montés mobiles sur ledit berceau (40) de manière à pouvoir occuper une position ouverte ainsi qu'une position fermée dans laquelle ils sont supportés à l'avant par ladite entité et à l'arrière par un système d'inverseur de poussée,
**caractérisé en ce que** l'ensemble est conçu de sorte que lorsque les capots de soufflante (34) sont en position ouverte, ledit berceau (40) adopte une première configuration dans laquelle son extrémité arrière est retenue par une portée (60) du mât d'accrochage, et de sorte que lorsque les capots de soufflante (34) sont en position fermée, ledit berceau, porté par les capots de soufflante, adopte une seconde configuration dans laquelle il est dépourvu de liaison mécanique directe avec les autres éléments du mât.

2. Ensemble moteur selon la revendication 1, **caractérisé en ce que** ledit berceau (40) est monté articulé à son extrémité avant sur ladite entité, selon un axe d'articulation (35) parallèle à une direction transversale (Y) de l'ensemble.

3. Ensemble moteur selon la revendication 1 ou la revendication 2, **caractérisé en ce que** ladite portée (60) du mât d'accrochage est solidaire d'une structure secondaire (28) de ce mât.

4. Ensemble moteur selon l'une quelconque des revendications précédentes, **caractérisé en ce que** ledit berceau (40) est pivoté d'un angle compris entre 0,5 et 5° entre sa première et sa seconde configuration, autour de son articulation avec ladite entité.

5. Ensemble moteur selon l'une quelconque des revendications précédentes, **caractérisé en ce que** ledit berceau (40) est monté articulé à son extrémité avant sur l'entrée d'air (32).

6. Ensemble moteur selon l'une quelconque des revendications précédentes, **caractérisé en ce que** ledit berceau (40) et le capotage aérodynamique (46) sont réalisés d'une seule pièce.

7. Ensemble moteur selon l'une quelconque des revendications précédentes, **caractérisé en ce que** dans ladite seconde configuration, ledit capotage aérodynamique (46) de la structure avant (24) se situe dans le prolongement aérodynamique d'un autre capotage aérodynamique (28) du mât d'accrochage.

8. Ensemble moteur selon l'une quelconque des revendications précédentes, **caractérisé en ce que** chaque capot de soufflante (34) est monté articulé sur ledit berceau (40), à l'aide d'au moins deux articulations (48).

9. Ensemble moteur selon l'une quelconque des revendications précédentes, **caractérisé en ce que** dans la première configuration, l'extrémité arrière du berceau repose sur la portée (60) du mât d'accrochage.

10. Aéronef comprenant au moins un ensemble moteur (1) selon l'une quelconque des revendications précédentes, assemblé sur une aile ou sur une partie arrière de fuselage de cet aéronef.

## Patentansprüche

1. Triebwerksystem (1) für ein Luftfahrzeug, umfassend ein Triebwerk (6), eine Aufhängevorrichtung für das Triebwerk (4) sowie eine Gondel (3), die das Triebwerk (6) umgibt und mit Fanverkleidungen (34) sowie einem Lufteinlass (32) ausgestattet ist, wobei die Aufhängevorrichtung (4) eine starre Struktur (8) sowie eine vordere aerodynamische Struktur (24) umfasst, wobei die letztere eine mit einer aerodynamischen Verkleidung (46) ausgestattete Tragstruktur (40) aufweist, wobei die Tragstruktur (40) an ihrem vorderen Ende an einem Element schwenkbar angebracht ist, das ein Fangehäuse (18) des Triebwerks (6) sowie den Lufteinlass (32) umfasst, und die Fanverkleidungen (34) an der Tragstruktur (40) derart beweglich angebracht sind, dass sie eine offene Position sowie eine geschlossene Position, in der sie vorne durch das Element und hinten durch ein Schubumkehrsystem getragen sind, einnehmen können,
**dadurch gekennzeichnet, dass** das System derart gestaltet ist, dass, wenn die Fanverkleidungen (34) in offener Position sind, die Tragstruktur (40) eine erste Konfiguration annimmt, in der ihr hinteres Ende durch eine Zapfensitzstruktur (60) des Aufhängesystems festgehalten wird, und derart gestaltet ist, dass, wenn die Fanverkleidungen (34) in geschlossener Position sind, die Tragstruktur, die durch die Fanverkleidungen gehalten wird, eine zweite Konfiguration annimmt, in der sie keine direkte mechanische Verbindung mit den anderen Elementen des Systems aufweist.

2. Triebwerksystem nach Anspruch 1, **dadurch gekennzeichnet, dass** die Tragstruktur (40) an ihrem vorderen Ende an dem Element um eine Schwenkachse (35), die parallel zu einer Querrichtung (Y) des Systems ist, schwenkbar angebracht ist.

3. Triebwerksystem nach Anspruch 1 oder Anspruch 2, **dadurch gekennzeichnet, dass** die Zapfensitzstruktur (60) des Aufhängesystems mit einer Zusatzstruktur (28) dieses Systems einstückig ist.

4. Triebwerksystem nach einem der vorhergehenden Ansprüche, **dadurch gekennzeichnet, dass** die Tragstruktur (40) mit einem Winkel, der zwischen 0,5 und 5° liegt, zwischen dessen erster und dessen zweiter Konfiguration um deren Gelenkverbindung mit dem Element gedreht wird.

5. Triebwerksystem nach einem der vorhergehenden Ansprüche, **dadurch gekennzeichnet, dass** die Tragstruktur (40) an deren vorderen Ende am Lufteinlass (32) schwenkbar angebracht ist.

6. Triebwerksystem nach einem der vorhergehenden Ansprüche, **dadurch gekennzeichnet, dass** die Tragstruktur (40) und die aerodynamische Verkleidung (46) in einem einzigen Stück ausgeführt sind.

7. Triebwerksystem nach einem der vorhergehenden Ansprüche, **dadurch gekennzeichnet, dass** sich die aerodynamische Verkleidung (46) der vorderen Struktur (24) in der zweiten Konfiguration in der aerodynamischen Verlängerung einer anderen aerodynamischen Verkleidung (28) des Aufhängesystems befindet.

8. Triebwerksystem nach einem der vorhergehenden Ansprüche, **dadurch gekennzeichnet, dass** jede Fanverkleidung (34) mit Hilfe von mindestens zwei Gelenkverbindungen (48) schwenkbar an der Tragstruktur (40) angebracht ist.

9. Triebwerksystem nach einem der vorhergehenden Ansprüche, **dadurch gekennzeichnet, dass** das hintere Ende der Tragstruktur in der ersten Konfiguration auf der Zapfensitzstruktur (60) des Aufhängesystems ruht.

10. Luftfahrzeug, umfassend mindestens ein Triebwerksystem (1) nach einem der vorhergehenden Ansprüche, das an einem Tragflügel oder einem hinteren Rumpfbereich dieses Luftfahrzeugs angeordnet ist.

## Claims

1. Engine assembly (1) for aircraft comprising an engine (6), a coupling device of the engine (4) as well as a nacelle (3) surrounding the engine (6) and provided with fan cowls (34) as well as an air intake (32), said coupling device (4) comprising a rigid structure (8) as well as a fore aerodynamic structure (24), the latter having a cradle (40) equipped with an aerodynamic cowling (46), said cradle (40) being hinge mounted at its fore end on an entity comprising a fan housing (18) of said engine (6) as well as the air intake (32), and said fan cowls (34) being mounted to move on said cradle (40) so as to be able to occupy an open position and a closed position in which they are supported at the fore by said entity and at the aft by a thrust reverser system,
**characterised in that** the assembly is designed such that when the fan cowls (34) are in open position, said cradle (40) adopts a first configuration in which its aft end is retained by a span (60) of the engine mounting structure, and such that when the fan cowls (34) are in closed position, said cradle, borne by the fan cowls, adopts a second configuration in which it is lacking any direct mechanical link with the other elements of the engine mounting structure.

2. Engine assembly according to claim 1, **characterised in that** said cradle (40) is hinge mounted at its fore end on said entity, along a hinge axis (35) parallel to a transversal direction (Y) of the assembly.

3. Engine assembly according to claim 1 or claim 2, **characterised in that** said span (60) of the engine mounting structure is integral with a secondary structure (28) of said engine mounting structure.

4. Engine assembly according to any of the preceding claims, **characterised in that** said cradle (40) is pivoted by an angle comprised between 0.5 and 5° between its first and its second configuration, around its hinge with said entity.

5. Engine assembly according to any of the preceding claims, **characterised in that** said cradle (40) is hinge mounted at its fore end on the air intake (32).

6. Engine assembly according to any of the preceding claims, **characterised in that** said cradle (40) and the aerodynamic cowling (46) are made from a single part.

7. Engine assembly according to any of the preceding claims, **characterised in that** in said second configuration, said aerodynamic cowling (46) of the fore structure (24) lies in the aerodynamic extension of another aerodynamic cowling (28) of the engine mounting structure.

8. Engine assembly according to any of the preceding claims, **characterised in that** each fan cowl (34) is hinge mounted on said cradle (40) by means of at least two hinges (48).

9. Engine assembly according to any of the preceding claims, **characterised in that** in the first configuration the aft end of the cradle rests on the span (60) of the engine mounting structure.

10. Aircraft comprising at least one engine assembly (1) according to any of the preceding claims, assembled on a wing or on an aft part of the fuselage of said aircraft.
